# EUROPEAN PATENT SPECIFICATION

(11) **EP 0 414 908 B1**
(45) Date of publication and mention of the grant of the patent: **19.07.1995**
(21) Application number: 90902840.9
(22) Date of filing: 13.02.1990
(51) Int. Cl.: B29C 33/42, B29C 33/44

(54) **MOLD FOR MOLDING VULCANIZATION**
VULKANISIERUNGSFORM
MOULE DE VULCANISATION

(30) Priority: 15.02.1989 JP 35297/89; 18.10.1989 JP 271382/89
(43) Date of publication of application: 06.03.1991
(73) Proprietor: SUMITOMO RUBBER INDUSTRIES LIMITED, Chuo-ku Kobe-shi Hyogo 651 (JP)
(72) Inventor: MIYATA, Mitsuki, Chuo-ku Kobe-shi Hyogo 650 (JP); UEDA, Yasunori 6-10, Konan-cho 4-chome, Kobe-shi Hyogo 658 (JP)
(74) Representative: Stewart, Charles Geoffrey
(86) International application number: PCT/JP90/00175
(87) International publication number: WO 90/09268

(56) References cited:
- JP-A- 0 501 185
- JP-A- 5 197 682
- JP-A-58 211 438
- JP-B- 4 721 838
- JP-U- 0 533 985

## Description

The present invention relates to vulcanising moulds, and more particularly to split vulcanising moulds for tyres.

Figure 24 shows a conventional example, i.e. a segmental vulcanising tyre mould, which comprises a fixed lower mould b corresponding to one sidewall of a tyre, a movable upper mould a movable upwards and downwards relative to the fixed lower mould b, and a sector c interposed between the moulds and corresponding to the tread of the tyre f. Needless to say, these members are all annular. The sector c comprises a plurality of segmental blocks arranged circumferentially so as to be easily removable from the tyre tread having a pattern of indentations or projections. When an actuator d is raised upon completion of vulcanisation, the sector c automatically moves horizontally outwards, out of contact with the tread of the tyre f. When the actuator is further raised, the sector c moves upwards therewith. More specifically, each segmental block of the sector c is in engagement with the actuator d at a slide portion extending obliquely downwards so as to be horizontally movable outwards with the raising of the actuator d. Furthermore, the sector c is held down, for example, by the upper mould a so as not to raise until the sector c moves completely out of contact with the tread of the tire f, the sector being upwardly movable only after it has been removed from the tread.

As seen in Figure 24, when the sector is arranged to meet the upper and lower moulds a,b at positions e on the tread surface, the distance the sector c needs to be slidingly moved radially of the tyre (so as to be later movable upwards without contacting the tyre tread) can be as short as S1. However, in the case of such separating positions, a stepped portion is likely to occur at the tread surface, or if the separating position coincides with a pattern groove, a crack will develop. Alternatively, if the separating positions are provided on the tire sidewalls as shown in Figure 25, an increased sliding distance S2 is required to result in the size of moulds becoming larger.

On the other hand, for use with segmental vulcanising moulds for curing retreaded tyres, a sector is known which is divided into upper and lower pieces biased by springs or like elastic members and movable into contact with each other by a closing action of a press to close the sector. With this arrangement, the elastic members each have inherent rigidities or become different from each other in rigidity during use, so that the biasing forces of the elastic members are not always the same. Consequently, when the moulds are to be closed, the respective divided pieces will not always move from the regular position to upwardly or downwardly shift the parting line of the upper and lower sector pieces, or the sector pieces are likely to move radially (for closing) as displaced from each other, failing to move in synchronism. This entails the drawback that the centre (equator) of the tyre is positioned off the centre of the mould assembly to impair the uniformity of the tyre. Further because the sector is opened or closed not horizontally but obliquely, it is impossible to give a great raw cover stretch which is an advantage of the segmental mould (advantage that the raw tyre can be made substantially the same to the finished tyre in outside diameter).

A vulcanising mould having features according to the preambles of claims 1 and 2 is known for example from Patent Publication JP-A-58-211438.

Thus an object of the present invention is to provide a compact vulcanising segmental mould which has a sector which is separated from each of the upper and lower mould members at a position set as desired without being limited by the sliding distance of the sector, the mould thus being adapted to vulcanise a tyre without permitting the tyre equator to be off the centre of the mould so as to assure the tyre is of good uniformity.

To accordingly fulfil the object, one aspect of the present invention provides vulcanising mould for a tyre comprising upper and lower, disc shaped, sidewall mould members for forming the upper and lower sidewalls of a tyre respectively, tread forming sectors comprising sets of upper and lower sector portions arranged in two co-axial rings to provide tyre tread region moulding, an actuator disposed radially outwardly of the sectors comprising upper and lower actuator portions to move horizontally and radially the upper and lower sets of sector portions respectively between closed and open states of the mould by means of internal engaging angled slide surfaces between the co-operating actuator portions and sector portions such that vertical actuator portion movement causes radial movement of the sector portions characterised by first means provided between the lower actuator portion and the lower mould member for biasing the lower actuator portion upward and second means provided between the upper actuator portion and each upper sector portion for biasing the upper section portion downward.

According to another aspect of the invention a vulcanising mould for a tyre comprising upper and lower, disc shaped, sidewall mould members for forming the upper and lower sidewalls of a tyre respectively, tread forming sectors comprising sets of upper and lower sector portions arranged in two co-axial rings to provide tyre tread region moulding, an actuator disposed radially outwardly of the sectors comprising upper and lower actuator portions to move horizontally and radially the upper and lower bets of sector portions respectively between closed and open states of the mould by means of internal engaging angled slide surfaces between the co-operating actuator portions and sector portions such that vertical actuator portion movement causes radial movement of the sector portions characterised by first means provided between the upper mould member and the upper actuator portion for biasing the upper actuator portion downward and second means provided between each lower sector portion and the lower actuator portion for biasing the lower sector portion upward.

With the mould of the invention thus provided, the sector is divided into upper and lower portions, so that when the mould is to be opened, there is no need to raise the lower sector portion clear of the tyre tread. As a result, the sliding distance required of the sector can be a minimum (equal to the depth of the tread pattern grooves). Furthermore, the position where the sector is to be separated from each of the upper and lower mould members can be provided at a position optimised for the tyre performance, i.e. on the tyre sidewall, as desired without being limited by the sliding distance.

With this specific arrangement, only one of the sector portions is pushed by the pushing means, so that the parting line between the upper and lower sector portions does not move upwards or downwards, permitting these portions to radially slide along at the same level at all times to close the mould. Further the upper and lower sector portions are thus slidingly movable radially at the same time without any lag with respect to each other.

The pushing means may comprise an elastic member such as a spring, air cylinder or the like.

Further, more specifically, the mould of the invention may have the following features.

A stopper provided for holding the upper sector portion to prevent this portion from descending more than a predetermined amount relative to the upper actuator portion.

An upper actuator portion having a tapered inner peripheral surface formed with ridges or grooves extending upwards or downwards and arranged at a predetermined spacing circumferentially thereof.

The upper sector portion has an outer surface tapered with the same inclination as the inner peripheral surface of the upper actuator portion and formed with grooves or ridges slidably fitting to the ridges of grooves in the manner of a dovetail joint.

The lower actuator portion has an inner peripheral surface which is tapered with the same inclination as the inner peripheral surface of the upper actuator portion and which is formed with ridges or grooves extending upward or downward and arranged at a predetermined spacing circumferentially thereof.

The lower sector portion has an outer surface tapered with the same inclination as the inner peripheral surface of the lower actuator portion and formed with grooves or ridges slidably fitting to the ridges or grooves in the manner of a dovetail joint.

The divided joining faces of the upper and lower sector portions are each formed with a positioning indentation or projection.

The mould of the present invention, which is constructed as above, has the following advantages.

The position where the sector is separated from each of the upper and lower mould members can be determined as desired for the tyre without being limited by the sliding distance of the sector. More specifically, the position can be provided on the tyre sidewall, i.e. at a position optimum from the viewpoint of tyre performance. Nevertheless, the sector sliding distance remain a minimum as in the case where the separating position is provided on the tread side. In other words, the distance can be made equal to the depth of the tread pattern grooves as will be apparent from the embodiment described. The mould can therefore be compact.

The position of the parting line between the upper and lower sector portions does not move upwardly or downwardly when the mould is closed, permitting these sector portions to move radially while being maintained at the same level. Moreover, since the upper and lower sector portions slide along in synchronism with each other in the same direction, the tyre can be vulcanised with its equator positioned at the centre of the mould. This provides vulcanised moulded products with good stability at all times. Since one of the sector portions and one of the actuator portions need only to be held by spring or elastic members, the overall arrangement and mechanism can be simplified and the mould designed as a compact assembly. With the compact mould the press to be used can also be of a small size, hence minimising manufacturing cost.

According to the present invention, the actuator is divided into upper and lower portions, which need to be moved in synchronism. With the present invention, therefore, the upper and lower actuator portions are moved together by a predetermined amount and are thereafter separated. More specifically stated, the mould of the present invention is provided with means for releasably connecting the upper actuator portion and the lower actuator portion together and releasing the lower actuator portion from the upper actuator portion when these portions are raised by a predetermined amount from the mould clamping position of the lower position.

The connecting means comprises a pivotally movable hanging member provided on one of the upper and lower actuator portions and projecting towards the other actuator portion with an engaging portion formed at the projecting end, and an engageable portion provided on the other actuator portion and releasably engageable with the engaging portion when the upper and lower actuator portions are intimately fitted together. Means are provided for biasing the hanging member towards the engaging portion nd there is also a release member attached to the lower mould member for pivotally moving the hanging member against the biasing means to release the engaging portion from the engageable portion when the release member is moved vertically relative to the hanging member.

Alternatively, the connecting means may comprise a hook member movably supported by a horizontal pivot provided inside the upper actuator portion and having a lower end projecting beyond the lower surface of the upper actuator portion. An engaging portion is provided at the upper end of the lower actuator portion and is releasably engageable with a hook portion at the forward end of the hook member when the upper actuator portion is in intimate contact with the lower actuator portion. An elastic member is provided biasing the hook member hook portion radially inwards to engage the hook portion with the engaging portion when the upper actuator portion is in intimate contact with the lower actuator portion and a pushing portion is provided on the upper sector portion and movable into contact with a portion of the hook member to push the hook portion thereof radially outwards against the force of the elastic member to release the hook member from the engaging portion when the mould is in its opened state with the upper actuator portion raised to slightly lower the upper sector portion relative thereto.

The hook type connecting means operates as follows. When the upper actuator portion is raised while the mould is in its completely closed state (that is when the upper actuator portion and the lower actuator portion are in intimate contact with each other and the hook member hook portion is in engagement with the engaging portion), the lower actuator portion is held up by the hook member and raised along with the upper actuator portion, with the upper sector portion lowered relative to the actuator. The pushing portion (dovetail grooved end portion) of the upper sector portion radially outwardly pushes the hook portion of the hook member from engagement with the engaging portion to separate the upper actuator portion from the lower actuator portion.

Conversely, to completely close the mould from the state (fully opened state) wherein the upper and lower actuator portions are separate, the upper actuator portion is lowered to bring the upper sector portion into contact with the lower sector portion and cause the upper actuator portion to push down the lower actuator portion, so that the upper and lower sector portions are radially moved first for the hook portion to engage with the engaging portion.

According to the above construction, as various members are not disposed at an outer peripheral surface of a mould, the mould can be compact and has a good appearance.

More specifically, a hook member, a socket member forming a engaging portion, an elastic member and a block or the like forming a pushing portion can be made each as a single article. Furthermore specifically, these single articles are easy to attach or detach and have an advantage of favourable maintenance.
Figure 1 is a fragmentary view in section showing a vulcanising mould embodying the invention in its completely closed state;
Figure 2 is a fragmentary view in section of the same in an opened state;
Figure 3 is a view in section taken along the line A-A in Figure 1;
Figure 4 is a view in section taken along the line B-B in Figure 1;
Figure 5 is a view in section taken along the line D-D in Figure 1;
Figure 6 is a sectional view showing upper and lower actuator portions;

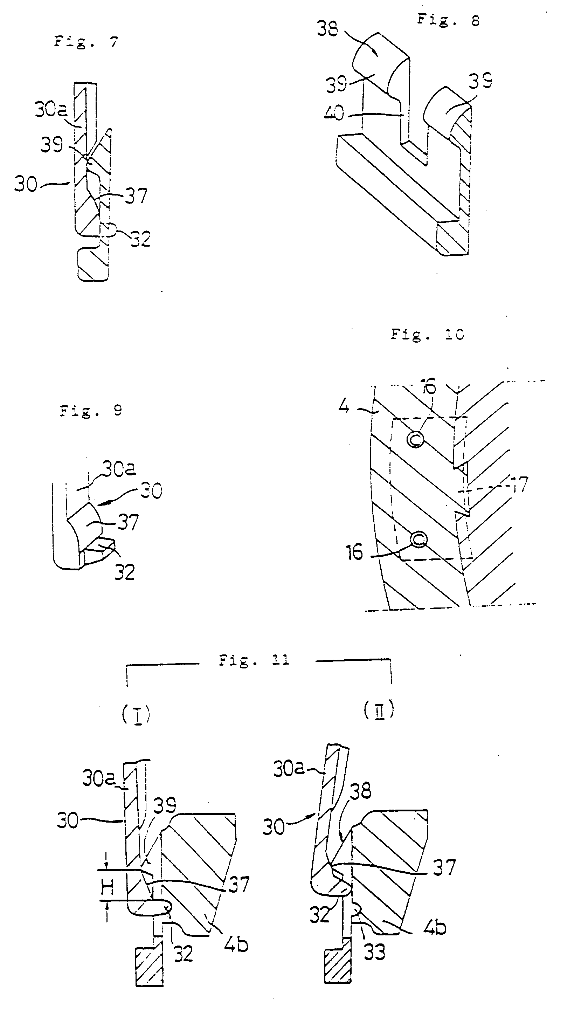

Figure 7 is a sectional view of a hanging member and a release member;
Figure 8 is a perspective view schematically showing the release member;
Figure 9 is a fragmentary perspective view schematically showing the hanging member;
Figure 10 is a view in section taken along the line C-C in Figure 1;
Figure 11 is a view for illustrating the operation of the hanging member;
Figure 12 is a fragmentary view in section showing the mould in its fully opened state;
Figure 13 is a sectional view of modified sector;
Figure 14 is a fragmentary view in section of another embodiment;
Figure 15 is a fragmentary view in section of another embodiment of the invention;
Figure 16 is a diagram in section for illustrating how the mould is opened and closed;
Figure 17 is an enlarged fragmentary view in section of an upper actuator portion and an upper sector portion;
Figure 18 is an enlarged fragmentary view in section of a lower actuator portion and a lower platen;
Figure 19 is an enlarged fragmentary view in section for illustrating how the mould is opened and closed;
Figure 20 is an enlarged view in section taken along the line VI-VI in Figure 15;
Figure 21 is an enlarged view in section taken along the line VII-VII in Figure 15;
Figure 22 is an enlarged view in section taken along the line VIII-VIII in Figure 15;
Figure 23 is an enlarged view in section taken along the line IX-IX in Figure 15;
Figure 24 is a fragmentary sectional view of a conventional example; and
Figure 25 is a fragmentary sectional view of a conventional example.

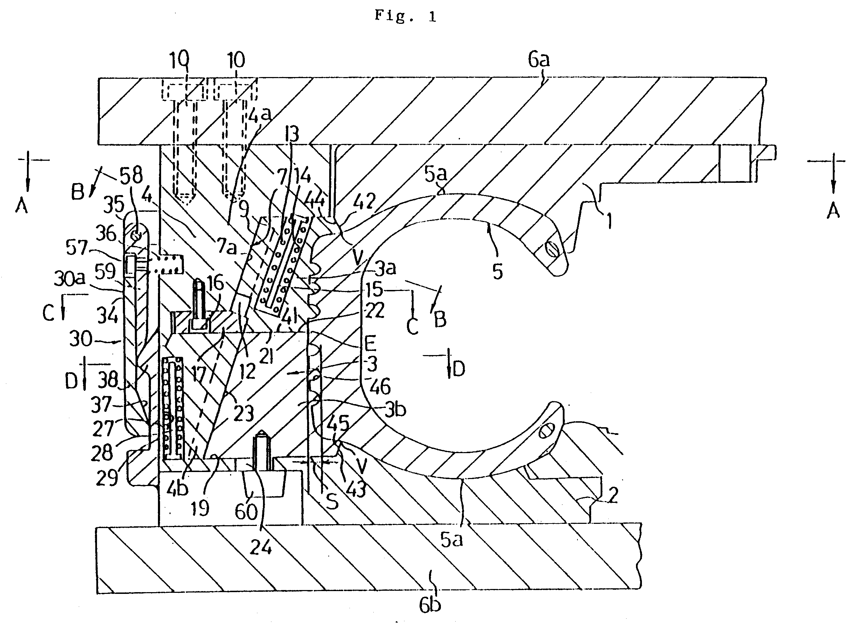

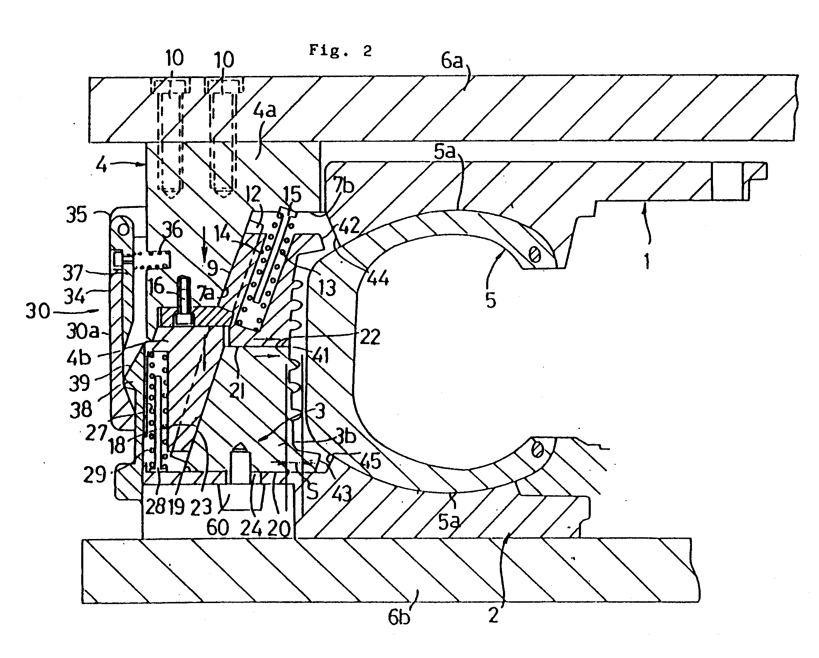

Figures 1 and 2 show a vulcanising mould according to the present invention. The mould comprises upper and lower mould members 1,2, a sector 3, and an actuator 4 disposed radially outwards of the sector 3 for vulcanising a tyre 5 or like elastomeric products. The sector 3 comprises a plurality of segmental blocks in an annular arrangement.

The actuator 4 is divided into an upper actuator portion 4a and a lower actuator portion 4b which are movable upwards and downwards relative to the sector 3. The sector 3 is also divided into an upper sector portion 3a and a lower sector portion 3b.

The upper actuator portion 4a is annular, is secured to an upper platen 6a with bolts or like fastening members 10 and has an inner periphery formed with a circumferential recess 7. The inner peripheral surface 7a forming the recess 10 is tapered so that it flares radially outwards and downwards. The surface 7a is formed with upwardly or downwardly extending ridges 12.

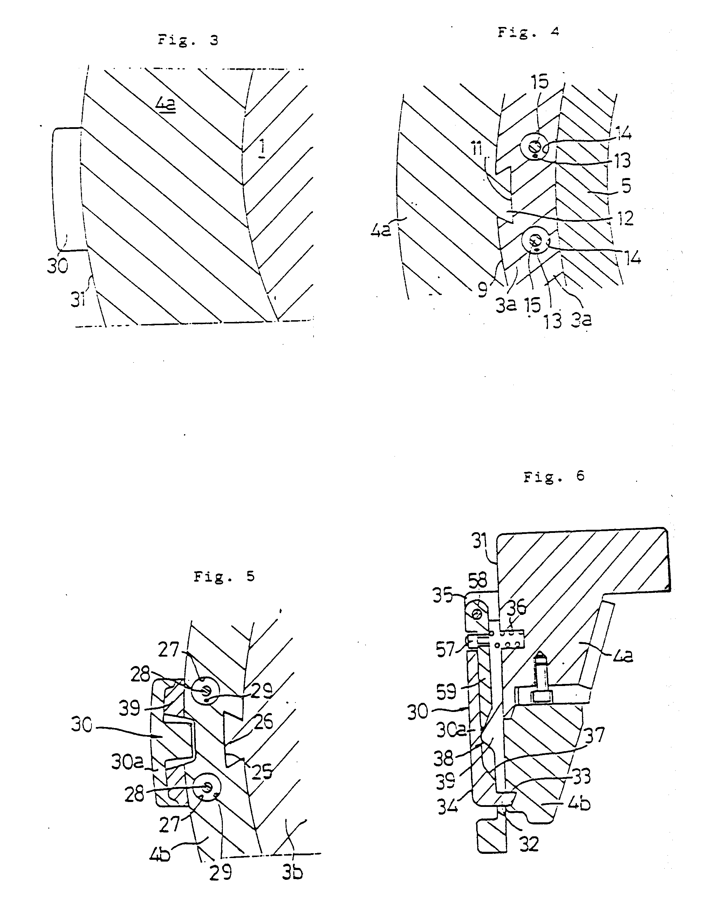

Each divided block of the upper sector portion 3a is fitted in the recess 7 of the upper sector portion 4a and has a tapered outer surface 9 which is in slidable contact with the inner peripheral surface 7a defining the recess 7. As seen in Figure 4, the outer surface 9 has a groove 11 to engage the ridge 12 and allow slidable movement upwards and downwards. The groove 11 is a dovetail groove, in which the ridge 12 is fitted in to provide a sliding dovetail joint.

The upper sector portion 3a is pushed downward by pushing means. More specifically, each divided block of the upper sector 3a is pushed downwards at all time by coil spring 13 attached to the upper actuator 4a. (Thins, the block is pushed down). With reference to Figure 4, the upper sector 3a is formed with a pair of blind holes or bores 14. Support rods 15 inserted in the respective bores 14 are pressed against the recessed upper surface 7b of the upper actuator 4a by the spring members 13 which are inserted concentrically with the rods. The axes of the bore 14 and the support rod 15 are disposed at the same angle of inclination as the inner peripheral surface 7a of the circumferential recess 7 of the upper actuator 4a and the outer surface 9 of the upper sector portion 3a. The biasing means is not limited to such a spring member 13 but alternatively may be an air cylinder or the like.

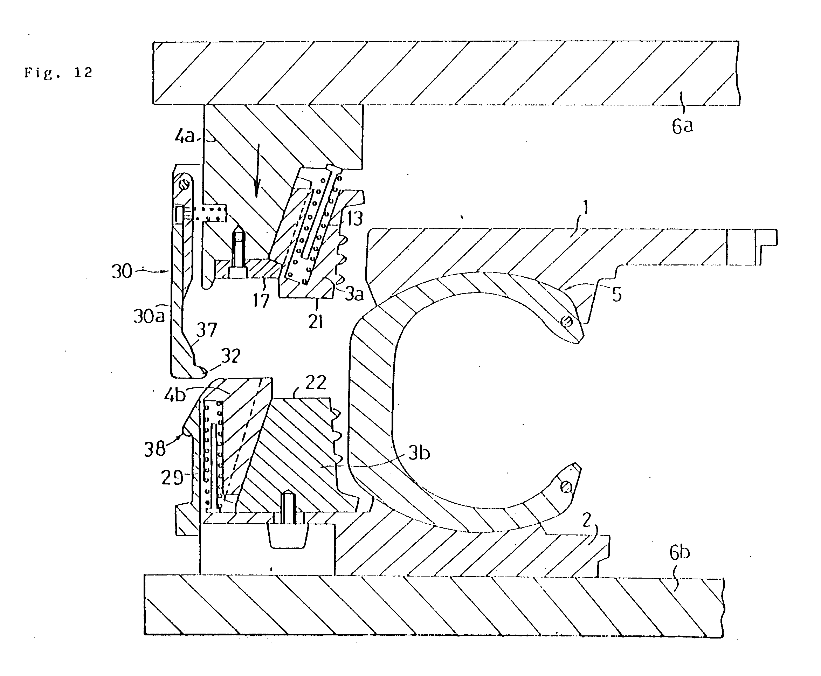

A stopper 17 (see Figure 10) in the form of a flat plate is secured by bolts or like fastening members 16 to the lower surface of the upper actuator portion 14a. Accordingly, the upper sector portion 3a is prevented from falling out by the stopper 17 as seen in Figure 2.

Each block of the lower sector portion 3b has a slanting outer surface 18 the same as the outer surface 9 of the upper sector 3a and a lower surface 20 slidable on a horizontal surface portion 19 of the lower member 2 and is mounted on the lower mould member 2. The lower mould member 2 is attached to a lower platen 6b. Indicated at 60 is a bolt for slidably attaching the lower sector portion 3b to the lower mould member 2, and at 24 a slot.

The lower actuator portion 4b is annular and has an inner peripheral surface 23 in the form of the same slanting surface as the inner peripheral surface 7a of the upper actuator portion 4a. The surface 23 is in slidable contact with the outer surface 18 of the lower sector portion 3b. As shown in Figure 5, grooves 25 upwardly and downwardly extending are formed in the inner peripheral surface 23 of the lower actuator portion 4. Ridges 26 are formed on the outer surface 18 of the lower sector portion 3b and slidably engage the grooves 25 in the manner of dovetail joints.

The lower actuator portion 4b is pushed upwards by pushing means. More specifically, the lower actuator portion 4b is always pushed upwards by spring members 29, such as coiled springs, attached to the lower mould member 2. As shown in Figure 5, a plurality of vertical blind bores 27 are formed in the lower actuator portion 4b and arranged circumferentially thereof. Support rods 28 in the respective bores 27 are fixed to the lower mould member 2. The spring members 29 are supported by the support rods 28 in the respective bores 27.

The upper actuator portion 4a is provided with connecting means 30 to allow lifting of the lower actuator portion 4b. As seen in Figure 1, 2 or 3, the connecting means 30 has a plurality of hanging members 30a provided on the outer peripheral surface 31 of the upper actuator portion 4a and arranged circumferentially thereof.

As shown in Figure 6, each hanging member 30a has at its forward end a latch 32 releasably engageable in a notch 33 in the lower actuator portion 4b. More specifically, the hanging member 30a comprises a main portion 34 having the latch 32 at its forward end, a connecting portion 59 connected to the main portion 34, and a support portion 35 is pivotally locating and supporting the connecting portion 59 on the outer surface 31 of the upper actuator portion 4a. The connecting portion 59 is pulled towards the upper actuator portion 4a by a spring member 36. Indicated at 57 is a connector for connecting the main portion 34 to the connecting portion 59, and at 58 a pin. As shown in Figure 9, the main portion 34 is formed with a protuberance 37 on the inner side of its lower end, with the latch 32 projecting horizontally from the lower extremity of the protuberance 37.

With reference to Figure 8, the outer periphery of the lower mould member 2 is provided with a release member 38 for releasing the latch 32 of the hanging member 30a from the notch 33. More specifically, the release member 38 has projections 39 for sliding contact with the protuberance 37, and a slot 40 between the projections 39 for the latch 32 to be inserted therein allowing upward and downward movement.

Accordingly, when the upper actuator portion 4a rises with the rise of the upper platen 6a from the state shown in Figure 6 (wherein the latch 32 is engaged in the notch 33), the latch 32 rises in the slot 40, lifting the lower actuator 4b therewith as shown in Figure 11(I). When the portion 4a further rises from the state of Figure 11(I) a distance H (i.e. the height of the protuberance 37), the protuberance 37 moves sliding over the projections 39, releasing the latch 32 from the notch 33 as seen in Figure 11(II). The lower actuator portion 4b is thereafter held supported by being pushed upwardly by the spring members 29.

When a raw tyre 5 is to be vulcanised using the mould, the tyre 5 is placed on the lower mould member 2 as seen in Figure 12, and the upper platen 6a is thereafter lowered, whereby the latch 32 of each hanging member 30a is brought to the state of Figure 11(II), then to the state of Figure 11(I) and thereafter to the state shown in Figure 2. At the same time, the lower surface 21 of the upper section portion 3a comes into contact with the upper surface 22 of the lower sector portion 3b, and the upper actuator portion 4a depresses the lower actuator portion 4b. With further downward movement of the upper platen 6a from the state shown in Figure 2, then upper actuator portion 4a moves further downwards in the direction of the arrow, and the lower actuator portion 4b also moves downwards in the direction of the arrow being pushed by the upper actuator portion 4a. The upper sector portion 3a and the lower sector portion 3b slidingly move in the radial direction at the same time as indicated by arrows.

The parting line 41 between the lower surface 21 of the upper sector portion 3a and the upper surface 22 of the lower sector portion 3b is in coincidence with the equator E of the tyre 5. When the sector portions 3a,3b slide, the parting line 41 moves radially of the mould always at the same level as the equator. As another embodiment, the parting line can of course be positioned off the tyre equator. Regardless of the position of the parting line however, the upper and lower sector portions are movable radially inwardly of the mould when the mould is closed without upward or downward shift of the parting line.

When the upper platen 6a comes into contact with the upper mould member 1 as seen in Figure 1, the upper inner edge 42 of the upper sector portion 3a comes into contact with the lower outer edge 44 of the upper mould member 1, and the lower inner edge 43 of the lower sector portion 3b with the inner edge 45 of horizontal surface portion 19 of the lower mould member 2. The mould is thus completely closed.

Accordingly, the sector 3 is separated from the upper and lower mould members 1,2 at positions indicated at V in Figure 1. Thus, the position of separation, V, can be on the tyre sidewalls. Further the sliding distance S required of the sector 3 for opening the mould can be a minimum (corresponding only to the depth of the tread pattern grooves 46).

When the upper platen 6a is raised after vulcanisation, the upper actuator portion 4a is raised, and the lower actuator portion 4b is raised since the latch 22 of each hanging member 30a is engaged in the notch 33. Consequently, the upper and lower sector portions 3a,3b slide outward by the distance S radially of the mould to the position shown in Figure 2. Then the hanging member 30a is in the position shown in Figure 11(I). When the hanging member 30a is raised further from this state by further raising of the upper platen 6a, the member 30a is brought to the position shown in Figure 11(II), releasing the latch 32 from the notch 33. The opened actuator 4b is held up by the spring members 29. thus, the mould is fully opened with the vulcanised tyre 5 left therein.

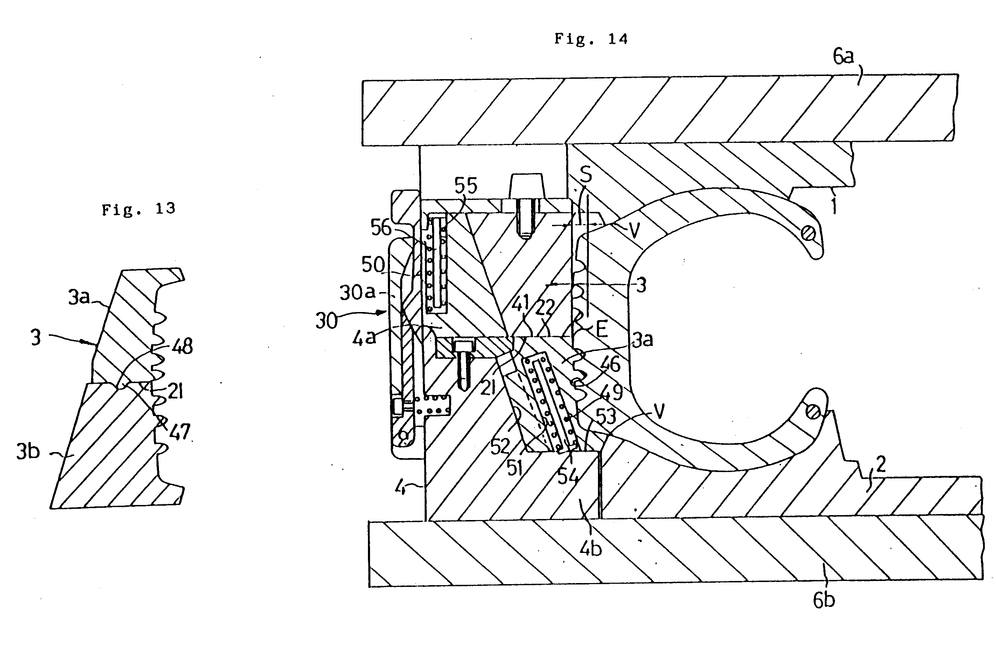

Figure 13 shows modified upper and lower sector portions 3a,3b. A projection 47 is formed on the lower surface 21 of the upper sector portion 3a, and the upper surface 22 of the lower sector portion 3b is formed with a groove 48 to accommodate the projection 47.

Accordingly, the upper and lower sector portions 3a,3b are slidable in the same direction at the same time.

Next, Figure 14 shows another embodiment which comprises a spring member 49 for pushing upwardly the lower sector portion 3b, and a spring member for pushing downwardly the upper actuator portion 4a. More specifically, the lower sector portion 3b is formed with a slanting blind bore 51, and a support rod 54 inserted in the bore 51 is secured to a lower surface 53 defining an inner circumferential recess 52 in the lower actuator portion 4b. The spring member 49 is supported by the red 54 in the bore 51. The upper actuator portion 4a has a vertical blind bore 55, a support rod 56 inserted in the bore 55 is secured to the upper mould member 1, and the spring member 50 is supported by the rod 56 in the bore 55.

The present embodiment corresponds to the mould of Figure 1 as turned upside down, so that the other portion therefor will not be described in detail.

Accordingly, the sector 3 is separate from the upper and lower mould members 1,2 at positions V which again can be on the tyre sidewalls 5a. Moreover, the sliding distance S required of the sector 3 is a minimum corresponding to the depth of the tread pattern grooves 46. With the tyre equator positioned centrally of the mould, there is no likelihood of impairing the uniformity of the tyre.

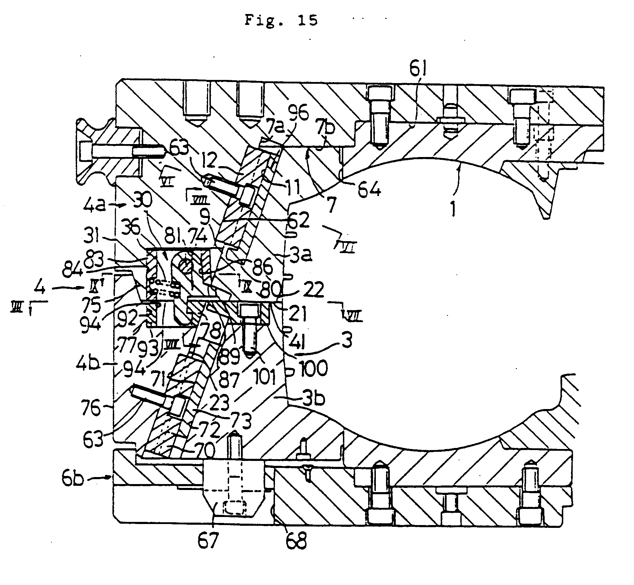

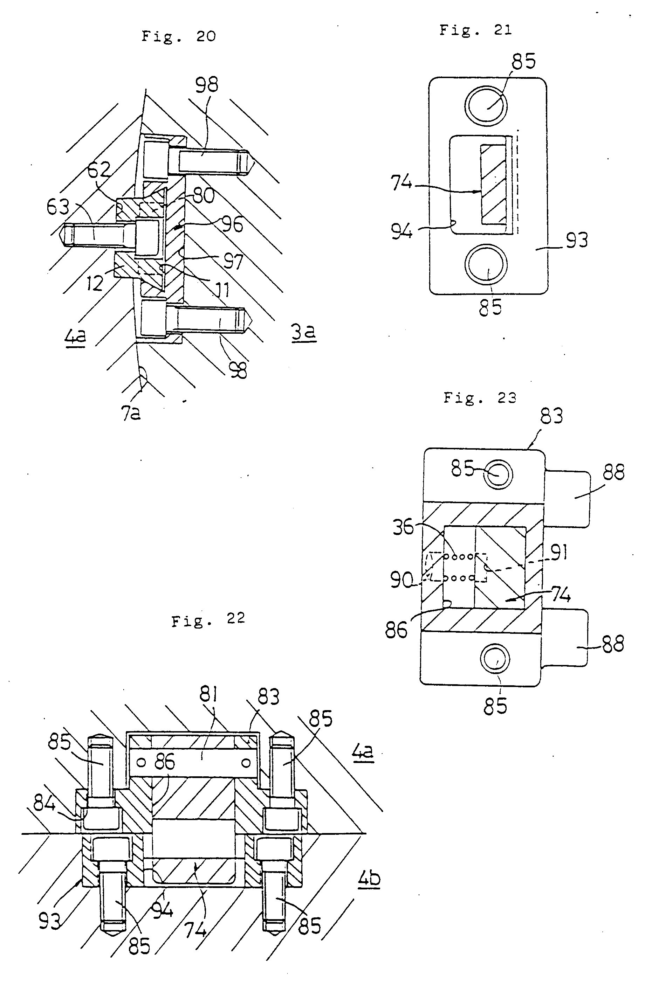

Figure 15 shows another embodiment, wherein an upper actuator portion 4a is annular and is removably fixed to an upper platen 6a. An upper mould member 1 is removably fixed to the lower surface 61 of an upper wall of the actuator portion 4a. This portion 4a has a tapered inner peripheral surface 7a which is flared radially outward toward its lower end. As shown in Figures 15 and 20, the peripheral surface 7a is formed with a groove 62 having a ridge 12 fixed therein by a bolt or like fastening member 63.

An upper sector portion 3a is located in a circumferential groove 7 defined by the inner peripheral surface 7a of the upper actuator portion 4a, a lower surface 7b of upper wall of the portion 4a and the outer periphery 64 of the upper mould member 1. The upper sector portion 3a has a tapered outer surface 9 in slidable contact with the inner peripheral surface 7a of the upper actuator portion 4a. As seen in Figures 15 and 20, the outer surface 9 is formed with a dovetail groove 11 slidably engaging the ridge 12.

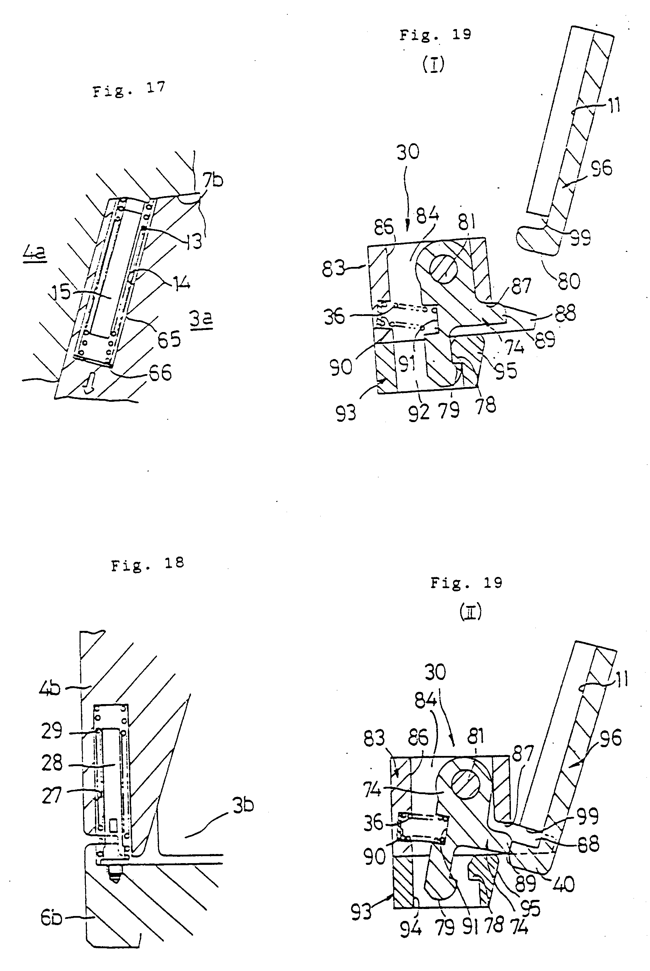

Each block of the upper sector portion 3a is always biased downwards by a spring member 13, such as a coiled spring, provided on the upper actuator portion 4a. More specifically stated with reference to Figure 17, each block of the upper sector portion 3a is formed with a blind bore 14. A support rod 15 having the spring member 13 therearound and inserted in the blind bore 14 is pressed against the upper wall lower surface 7b of the upper actuator portion 4a. The axes of the bore 14 and the support rod 15 are disposed at the same angle of inclination as the inner surface 7a of the actuator portion 4a and the outer surface 9 of the upper section portion 3a. Indicated at 65 is a tube fitted in the bore 14, and at 66 a ring at the bottom of the bore 14.

A lower sector portion 3b has an outer surface 18 with the same inclination as the outer surface 9 of the upper sector portion 3a and is mounted so as to be radially slidable on a lower platen 6b. A lower mould member 2 is attached to the lower plated 6b. Indicated at 67 in figure 15 is a bolt member fitted in a slide groove 68 in the lower platen 6b for slidable attaching the lower sector portion 3b to the lower platen 6b. The groove 68 is in the form of a dovetail groove, and the bolt member 67 is flanged so as not to slip out of the slide groove 68.

The lower actuator portion 4b is annular and has an inner peripheral surface 23 having the same inclination as the inner peripheral surface 7a of the upper actuator portion 4a. The surface 23 is in slidable contact with the outer surface 18 of the lower sector portion 3b. As seen in Figure 15, grooves 69 are formed in the inner peripheral surface 23 of the lower actuator portion 4b, and a ridge 70 is fitted in each groove 69 with a fastening member 63. The outer surface 18 of the lower sector portion 3b is formed with a dovetail groove 71 for the ridge 70. The dovetail groove 71 is formed in a block 73 fitted in a groove 72 formed in the outer surface 18 of the sector portion 3b.

With reference to Figure 18, the lower actuator portion 4b is always biased upwards by spring members 29, such as coiled springs, attached to the lower platen 6b. More specifically, the lower actuator portion 4b has a plurality of vertical blind bores 27 arranged circumferentially thereof. A support rod 28 inserted in each of the bores 27 is secured to the lower platen 6b. The spring member 29 is provided around the rod 28 and inserted in the bore 27.

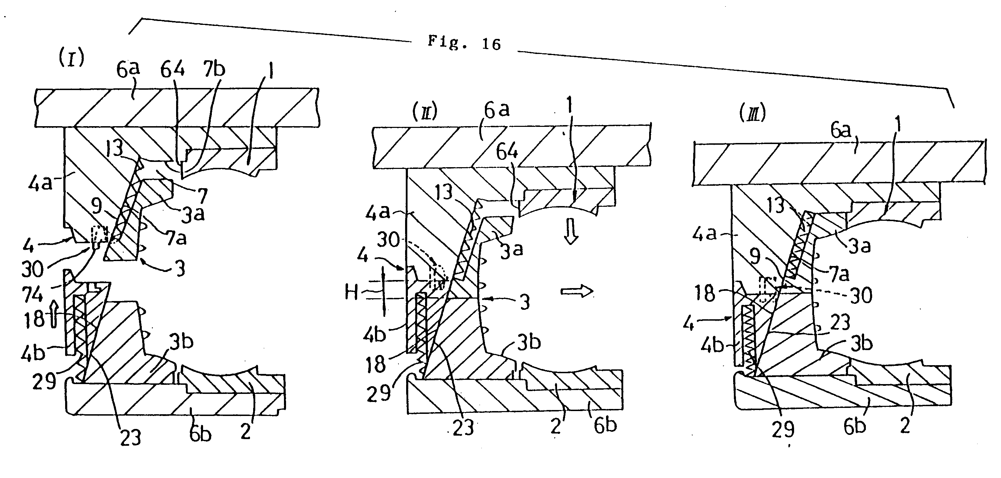

The mould is provided with connecting means 30 for raising the lower actuator portion 4b with the upper actuator portion 4a when the portion 4a is raised from the state in which the mould is completely closed (i.e. the state shown in Figures 15 and 16(III)).

While the upper actuator portion 4a is raised from the state shown in Figure 16(III) to the state shown in Figure 16(II) by a predetermined distance H by the rise of the upper platen 6a, the lower actuator portion 4b engaged by hook members 74 is also raised with the rise of the upper actuator portion 4a. When the upper actuator portion 4a thereafter rises further, the lower portion 4b is released from the hook members 74, allowing the upper portion 4a only to rise to the position shown in Figure 16(I). The lower actuator portion 4b remains in contact with the tapered surface of the lower sector portion 3b, as held pushed up by the spring members 29. With reference to Figure 15, the connecting means 30 comprises the hook member 74 which is disposed in a lower end portion 75 of the upper actuator portion 4a radially inwardly of its outer surface 31, an engaging portion 78 disposed in an upper end portion of the lower actuator portion 4b radially inwardly of the outer surface 76 of the portion 4b, a spring member 36 for pushing radially inwardly a hook portion 79 at the forward end of the hook member 74, and a pushing portion 80 provided in the upper sector portion 3a to push radially outwards the hook portion 79.

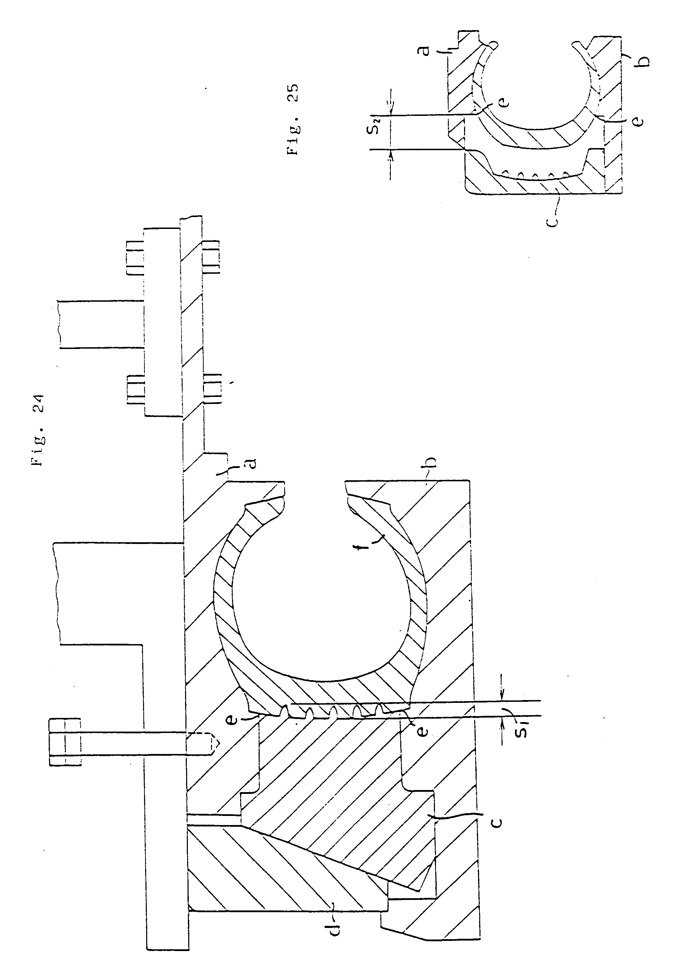

The hook member 74 is movably supported by a horizontal pivot 81 provided inside the upper actuator portion 4a and is partly projected (at the hook portion 79) beyond the lower surface 82 of the upper actuator portion 4a. The hook portion 79 is pivotally movable radially in the actuator. The pivot 81 is supported by a support member 83 attached to the upper actuator portion 4a. The support member 83 is fixed in a cavity 84 in the lower surface 82 of the portion 4a by fastening members 85 as seen in Figures 19 and 22. The support member 83 has a bore 86 extending therethrough having the hook member 74 pivotally movably inserted therein. A cutout 87 is formed in the lower end of the inner wall of the support member 83 centrally thereof. As seen in Figure 23, the inner wall lower end has pieces 88 projecting radially inward. The hook portion 79 is projected through the cavity 84.

The hook member 74 further has a protrusion 89 projecting radially inward and inserted in the cutout 87 of the support member 83. When the hook member 74 is in a vertical position, the protrusion 89 projects through the cutout 87 as shown in Figure 19(I).

The outer wall of the support member 83 has a recess 90 formed in its inner surface, while a recess 91 is formed in the outer face of the hook member 74. The spring member 36 is provided between the recesses 90,91 for pushing the hook portion 79 of the hook member 74 radially inwards into engagement with the engaging portion 78.

The engaging portion 78 is provided on a socket member 93 fitted in a cavity 92 formed in the lower actuator portion 4b. More specifically, the socket member 93 has a generally rectangular bore 94 (see Figure 21) extending therethrough, and the engaging portion 78 is formed on the inner surface of the inner wall 95 of the member 93. The forward end of the hook member 74 is inserted in the bore 94.

The pushing portion 80 is provided by the lower end of a block 96 having the dovetail groove 11 of the upper sector portion 3a. More specifically stated with reference to Figure 20, the block 96 is fixed in a grooved 97 in the outer surface 9 of the upper sector portion 3a by fastening members 98. An approximately L-shaped piece providing the pushing portion 80 projects from the lower end of the block centrally thereof. When the upper sector portion 3a is pushed down by the spring members 13 with the start of rise of the upper actuator portion 4a to open the mould, the pushing portion 80 pushes the protrusion 89 of the hook member 74 to thereby move the hook portion 79 of the hook member 74 radially outward out of engagement with the engaging portion 78 as shown in Figure 19(II). In the state shown in Figure 11(II), the lower end face 99 of the block 96 is in contact with the projecting pieces 88 of the support member 83, whereby the upper sector portion 3a is prevented from lowering further. Indicated at 100 in Figure 15 is a stop fixed to the upper surface 22 of the lower sector portion 3b with a fastening member 101.

To vulcanise a raw tyre using the mould, the tyre is placed on the lower mould member 2 with the upper platen 6a raised as seen in Figure 16(I), and the upper platen 6a is then lowered. In this state, the hook member 74 is pushed at one portion thereof by the pushing portion 80, with the hook portion 79 out of engagement with the engaging portion 78 as shown in Figure 19(II). As seen in Figure 16(II), the upper sector portion 3a, after coming into contact with the lower sector portion 3b, is pushed by this portion 3b, starting to rise relative to the upper actuator portion 4a. The rise of the upper sector portion 3a relative to the upper actuator portion 4a also raises the block 96 relative thereto, allowing the engagement of the hook portion with the engaging portion as seen in Figure 19(I). When the upper actuator portion 4a is lowered further by lowering again the upper platen 6a, the lower actuator portion 4b moves downwards against the force of the spring members 29, slidingly moving the upper sector portion 3a and the lower sector portion 3b radially inwards at the same time, whereby the mould is closed completely as seen in Figure 16(111). The tyre is vulcanised in this completely closed state.

The parting line 41 between the lower surface 21 of the upper sector portion 3a and the upper surface 22 of the lower sector portion 3b is in coincidence with the equator of the tyre. When the sector portions 3a,3b slide along, the parting line 41 moves radially of the mould at the same level as the tyre equator. The parting line 41 can of course be positioned off the tyre equator. Regardless of the position of the parting line, both the sector portions 3a,3b move radially inwards without upward or downward shift of the parting line 41 but with the line maintained at the same level even when the mould is closed.

When the upper platen 6a is raised after vulcanisation, the upper actuator portion 4a rises along with the lower actuator portion 4b since the hook portion 79 is in engagement with the engaging portion 78. The upper and lower sector portions 3a,3b therefore slide along radially outwards to open the sector 3. When the upper actuator portion 4a rises a predetermined distance H, this results in the descent of the upper sector portion 3a relative to the upper actuator portion 4a by the distance H, bringing the pushing portion 80 into contact with the protrusion 89 of the hook member 74. With further rise of the upper actuator portion 4a, the pushing member 80 pushes the protrusion 89, releasing the hook portion from the engaging portion as shown in Figure 19(II). The lower actuator portion 4b is held up by the spring members 29. Thus, the mould is fully opened with the vulcanised tyre remaining therein.

As described above, the vulcanising mould of the invention is used for vulcanising tyres.
- 1: upper mold member
- 2: lower mold member
- 3: sector
- 3a: upper sector portion
- 3b: lower sector portion
- 4: actuator
- 4a: upper actuator portion
- 4b: lower actuator portion
- 5: tire
- 5a: wire side wall
- 6a: upper platen
- 6b: lower platen
- 7: circumferential recess
- 7a: inner peripheral surface
- 7b: upper surface
- 9: outer surface
- 10: fastening member
- 11: groove
- 12: ridge
- 13: spring member for upper sector portion
- 14: blind bore
- 15: support rod
- 16: fastening member
- 17: stopper
- 18: outer surface (of lower sector portion 3b)
- 19: horizontal surface portion (of lower mold member 2)
- 20: lower surface (of lower sector portion 3b)
- 21: lower surface (of upper sector portion 3a)
- 22: upper surface (of lower sector portion 3b)
- 23: inner peripheral surface (of lower actuator portion 4b)
- 24: slot
- 25: groove (of 4b)
- 26: ridge
- 27: blind bore
- 28: support rod
- 29: spring member for lower actuator portion
- 30: connecting means
- 30a: hanging member
- 31: outer peripheral surface (of upper actuator)
- 32: latch
- 33: notch
- 34: main portion
- 35: support portion
- 36: spring member
- 37: protuberance
- 38: release member
- 39: projection
- 40: slot
- 41: parting line (between upper and lower sector portions)
- 42: upper inner edge (of upper sector portion)
- 43: lower inner edge (of lower sector portion)
- 44: lower outer edge (of upper mold member 1)
- 45: inner edge (of lower mold member 2)
- 46: tread pattern groove
- 47: projection
- 48: groove
- 49: spring member for lower sector portion
- 50: spring member for upper actuator portion
- 51: blind bore
- 52: inner circumferential groove
- 53: lower surface (of circumferential recess 52)
- 54: support rod
- 55: blind bore
- 56: support rod
- 57: connector
- 58: pin
- 59: connecting portion
- 60: bolt
- 61: lower surface of upper wall of upper actuator portion
- 62: groove
- 63: fastening member
- 64: outer periphery of upper mold member 1
- 65: tube
- 66: ring
- 67: bolt member
- 68: slide groove
- 69: groove
- 70: ridge
- 71: dovetail groove
- 72: groove
- 73: block
- 74: hook member
- 75: lower end portion
- 76: outer surface of lower actuator portion 4b
- 77: upper end portion of lower actuator portion
- 78: engaging portion
- 79: hook portion
- 80: pushing portion
- 81: pivot
- 82: lower surface of upper actuator portion
- 83: support member
- 84: cavity
- 85: fastening member
- 86: bore
- 87: cutout
- 88: projecting piece
- 89: protrusion
- 90: recess
- 91: recess
- 92: cavity
- 93: socket member
- 94: bore
- 95: inner wall
- 96: block
- 97: groove
- 98: fastening member
- 99: lower end face
- 100: stopper
- 101: fastening member

## Claims

1. A vulcanising mould for a tyre comprising upper and lower, disc shaped, sidewall mould members (1,2) for forming the upper and lower sidewalls of a tyre respectively, tread forming sectors (3) comprising sets of upper and lower sector portions (3a,3b) arranged in two co-axial rings to provide tyre tread region moulding, an actuator disposed (4) radially outwardly of the sectors (3) comprising upper and lower actuator portions (4a,4b) to move horizontally and radially the upper and lower sets of sector portions (3a,3b) respectively between closed and open states of the mould by means of internal engaging angled slide surfaces between the co-operating actuator portions (4a or 4b) and sector portions (3a or 3b) such that vertical actuator portion (4a,4b) movement causes radial movement of the sector portions (3a,3b) characterised by first means (29) provided between the lower actuator portion (4b) and the lower mould member (2) for biasing the lower actuator portion (4b) upward and second means (13) provided between the upper actuator portion (4a) and each upper sector portion (3a) for biasing the upper section portion (3a) downward .

2. A vulcanising mould for a tyre comprising upper and lower, disc shaped, sidewall mould members (1,2) for forming the upper and lower sidewalls of a tyre respectively, tread forming sectors (3) comprising sets of upper and lower sector portions (3a,3b) arranged in two co-axial rings to provide tyre tread region moulding, an actuator (4) disposed radially outwardly of the sectors (3) comprising upper and lower actuator portions (4a,4b) to move horizontally and radially the upper and lower sets of sector portions (3a,3b) respectively between closed and open states of the mould by means of internal engaging angled slide surfaces between the co-operating actuator portions (4a or 4b) and sector portions (3a or 3b) such that vertical actuator portion (4a,4b) movement causes radial movement of the sector portions (3a,3b) characterised by first means provided between the upper mould member and (1) the upper actuator portion (4a) for biasing the upper actuator portion (4a) downward and second means (49) provided between each lower sector portion (3b) and the lower actuator portion (4b) for biasing the lower sector portion (3b) upward.

3. A vulcanising mould according to claim 1 characterised in that the means for biasing the lower actuator portion comprises elastic members (2), and means for biasing the upper sector portion comprises elastic members (13).

4. A vulcanising mould according to claim 2 characterised in that the means for biasing the upper actuator portion comprises elastic members (50), and the means for biasing the lower sector portion comprises elastic members (49).

5. A vulcanising mould according to claim 1 characterised by a stopper (17),(100) for holding the upper sector portion (3a) to prevent the same from descending more than a predetermined amount relative to the upper actuator portion (4a).

6. A vulcanising mould according to claim 5 characterised in that the upper actuator portion (4a) has a tapered inner peripheral surface (7a) formed with ridges (12) or grooves extending upward or downward and arranged at a predetermined spacing circumferentially thereof, and the upper sector portion (3a) has an outer surface (9) tapered with the same inclination as the inner peripheral surface (7a) of the upper actuator portion (4a) and formed with grooves (11) or ridge slidably fitting to the ridges (12) or grooves in the manner of a dovetail joint.

7. A vulcanising mould according to claim 6 characterised in that the lower actuator portion (4b) has an inner peripheral surface (23) tapered with the same inclination as the inner peripheral surface (7a) of the upper actuator portion (4a) and formed with grooves (25) or ridges extending upward or downward and arranged at a predetermined spacing circumferentially thereof, and the lower sector portion (3b) has an outer surface (18) tapered with the same inclination as the inner peripheral surface (23) of the lower actuator portion (4b) and formed with ridges (26) or grooves fitting to the grooves (25)or ridges in the manner of a dovetail joint.

8. A vulcanising mould according to either of claims 1 or 2 characterised in that the divided joining faces (41) of the upper and lower sector portions (3a), (3b) are each formed with a positioning projection (47) or indentation (48).

9. A vulcanising mould according to either of claims 1 or 2 characterised in that connecting means (30) is provided for releasably connecting the upper actuator portion (4a) and the lower actuator portion (4b) together and releasing the actuator portions from each other for separation when the upper and lower actuator portions (4a), (4b) are raised by a predetermined amount from the mould clamping position at a lower level.

10. A vulcanising mould according to claim 9 characterised in that the connecting means (30) comprises a hanging member (30a) pivotally movably provided on one of the upper and lower actuator portions (4a),(4b) and projecting toward the other actuator portion with an engaging portion(32) formed at the projecting end, an engageable portion (3) provided on the other actuator portion and releasably engageable by the engaging portion (32) when the upper and lower actuator portions (4a),(4b) are intimately fitted together, means (36) for biasing the hanging member (30a0 toward a direction in which the engaging portion (32) engages with the engageable portion (33), and release member (38) attached to the lower mould member (2) for pivotally moving the hanging member (30a) against the biasing means (36) to release the engaging portion (32) from the engageabie portion (33) when the release member is moved vertically relative to the hanging member (30a).

11. A vulcanising mould according to claim 9 characterised in that the connecting means (30) comprises a hook member (74) movably supported by a horizontal pivot (81) provided inside the upper actuator portion (4a) and having a lower end projecting beyond the lower surface (82) of the upper actuator portion (4a), an engaging portion (78) provided at the upper end (77) of the lower 5 actuator portion (4b) and releasably engageable with a hook portion (79) at the forward end of the hook member (74) when the upper actuator portion (4a) is in intimate contact with the lower actuator portion (4b), an elastic member (36) for biasing the hook portion (79) of the hook member (74) radially inward to engage the hook portion (79) with the engaging portion (78) when the upper actuator portion (4a) is in intimate contact with the lower actuator portion (4b), and a pushing portion (80)provided on the upper sector portion (3a) and movable into contact with a portion of the hook member (74) to push the hook portion (79) thereof radially outward against the force of the elastic member (36) and release the hook member (74) from the engaging portion (78) when the mould is in its opened state with the upper actuator portion (4a) raised to slightly lower the upper sector portion (3a) relative thereto.

## Patentansprüche

1. Eine Vulkanisierungsform für einen Reifen mit oberen und unteren, scheibenförmigen Seitenwandformbauteilen (1, 2) zum Bilden der oberen bzw. unteren Seitenwände eines Reifens, Laufflächenbildungssektoren (3) mit Sätzen von oberen und unteren Sektorabschnitten (3a, 3b), die in zwei koaxialen Ringen angeordnet sind, um ein Formen der Reifenlaufflächenregion zu schaffen, einer Betätigungsvorrichtung (4), die radial außerhalb der Sektoren (3) angeordnet ist und obere und untere Betätigungsvorrichtungsabschnitte (4a, 4b) umfaßt, um jeweils die oberen und unteren Sätze von Sektorabschnitten (3a, 3b) zwischen geschlossenen und offenen Zuständen der Form mittels innerer, sich in Eingriff befindlicher, winkliger Gleitflächen zwischen den zusammenwirkenden Betätigungsvorrichtungsabschnitten (4a oder 4b) und Sektorabschnitten (3a oder 3b) horizontal und radial zu bewegen, so daß eine vertikale Bewegung der Betätigungsvorrichtungsabschnitte (4a, 4b) eine radiale Bewegung der Sektorabschnitt (3a, 3b) bewirkt,
**gekennzeichnet** durch
erste Mittel (29), die zwischen dem unteren Betätigungsvorrichtungsabschnitt (4b) und dem unteren Formbauteil (2) vorgesehen sind, um den unteren Betätigungsvorrichtungsabschnitt (4b) nach oben vorzuspannen, und zweite Mittel (13), die zwischen dem oberen Betätigungsvorrichtungsabschnitt (4a) und jedem oberen Sektorabschnitt (3a) vorgesehen sind, um den oberen Sektionsabschnitt (3a) nach unten vorzuspannen.

2. Eine Vulkanisierungsform für einen Reifen mit oberen und unteren, scheibenförmigen Seitenwandformbauteilen (1, 2) zum Bilden der oberen bzw. unteren Seitenwände eines Reifens, Laufflächenbildungssektoren (3) mit Sätzen von oberen und unteren Sektorabschnitten (3a, 3b), die in zwei koaxialen Ringen angeordnet sind, um ein Formen der Reifenlaufflächenregion zu schaffen, einer Betätigungsvorrichtung (4), die radial außerhalb der Sektoren (3) angeordnet ist und obere und untere Betätigungsvorrichtungsabschnitte (4a, 4b) umfaßt, um jeweils die oberen und unteren Sätze von Sektorabschnitten (3a, 3b) zwischen geschlossenen und offenen Zuständen der Form mittels innerer, sich in Eingriff befindlicher winkliger Gleitflächen zwischen den zusammenwirkenden Betätigungsvorrichtungsabschnitten (4a oder 4b) und Sektorabschnitten (3a oder 3b) horizontal und radial zu bewegen, so daß eine vertikale Bewegung der Betätigungsvorrichtungsabschnitte (4a, 4b) eine radiale Bewegung der Sektorabschnitte (3a, 3b) bewirkt,
**gekennzeichnet** durch
erste Mittel, die zwischen dem oberen Formbauteil (1) und dem oberen Betätigungsvorrichtungsabschnitt (4a) vorgesehen sind, um den oberen Betätigungsvorrichtungsabschnitt (4a) nach unten vorzuspannen, und zweite Mittel (49), die zwischen jedem unteren Sektorabschnitt (3b) und dem unteren Betätigungsvorrichtungsabschnitt (4b) vorgesehen sind, um den unteren Sektorabschnitt (3b) nach oben vorzuspannen.

3. Eine Vulkanisierungsform nach Anspruch 1,
dadurch gekennzeichnet,
daß das Mittel zum Vorspannen des unteren Betätigungsvorrichtungsabschnitts elastische Bauteile (2) umfaßt, und daß das Mittel zum vorspannen des oberen Sektorabschnitts elastische Bauteile (13) umfaßt.

4. Eine Vulkanisierungsform nach Anspruch 2,
dadurch gekennzeichnet,
daß das Mittel zum Vorspannen des oberen Betätigungsvorrichtungsabschnitts elastische Bauteile (50) umfaßt, und daß das Mittel zum Vorspannen des unteren Sektorabschnitts elastische Bauteile (49) umfaßt.

5. Eine Vulkanisierungsform nach Anspruch 1,
gekennzeichnet durch
einen Stopper (17), (100) zum Halten des oberen Sektorabschnitts (3a), um denselben daran zu hindern, mehr als ein vorbestimmtes Ausmaß relativ zu dem oberen Betätigungsvorrichtungsabschnitt (4a) herunterzugehen.

6. Eine Vulkanisierungsform nach Anspruch 5,
dadurch gekennzeichnet,
daß der obere Betätigungsvorrichtungsabschnitt (4a) eine verjüngte innere periphere Fläche (7a) aufweist, die mit Rippen (12) oder Nuten ausgebildet ist, die sich nach oben oder nach unten erstrecken und unter einer vorbestimmten Beabstandung in Umfangsrichtung davon angeordnet sind, und daß der obere Sektorabschnitt (3a) eine äußere Fläche (9) aufweist, die mit der gleichen Neigung wie die innere periphere Fläche (7a) des oberen Betätigungsvorrichtungsabschnitts (4a) verjüngt und mit Nuten (11) oder Rippen ausgebildet ist, die gleitbar zu den Rippen (12) oder Nuten in der Art und Weise einer Schwalbenschwanzverbindung passen.

7. Eine Vulkanisierungsform nach Anspruch 6,
dadurch gekennzeichnet,
daß der untere Betätigungsvorrichtungsabschnitt (4b) eine innere periphere Fläche (23) aufweist, die mit der gleichen Neigung wie die innere periphere Fläche (7a) des oberen Betätigungsvorrichtungsabschnitts (4a) verjüngt und mit Nuten (25) oder Rippen ausgebildet ist, die sich nach oben oder nach unten erstrecken und unter einer vorbestimmten Beabstandung in Umfangsrichtung davon angeordnet sind, und daß der untere Sektorabschnitt (3b) eine äußere Fläche (18) aufweist, die mit der gleichen Neigung wie die innere periphere Fläche (23) des unteren Betätigungsvorrichtungsabschnitts (4b) verjüngt und mit Rippen (26) oder Nuten ausgebildet ist, die zu den Nuten (25) oder Rippen in der Art und Weise einer Schwalbenschwanzverbindung passen.

8. Eine Vulkanisierungsform nach einem der Ansprüche 1 oder 2,
dadurch gekennzeichnet,
daß die geteilten Verbindungsseiten (41) der oberen und unteren Sektorabschnitte (3a), (3b) jeweils mit einem Positionierungsvorsprung (47) oder -vertiefung (48) ausgebildet sind.

9. Eine Vulkanisierungsform nach einem der Ansprüche 1 oder 2,
dadurch gekennzeichnet,
daß ein Verbindungsmittel (30) vorgesehen ist, um lösbar den oberen Betätigungsvorrichtungsabschnitt (4a) und den unteren Betätigungsvorrichtungsabschnitt (4b) miteinander zu verbinden und die Betätigungsvorrichtungsabschnitte voneinander zur Separation zu lösen, wenn die oberen und unteren Betätigungsvorrichtungsabschnitte (4a), (4b) um ein vorbestimmtes Ausmaß von der Formklemmposition auf einem niedrigeren Niveau angehoben sind.

10. Eine Vulkanisierungsform nach Anspruch 9,
dadurch gekennzeichnet,
daß das Verbindungsmittel (30) umfaßt ein Hängebauteil (30a), das schwenkbar bewegbar auf einem der oberen und unteren Betätigungsvorrichtungsabschnitte (4a), (4b) vorgesehen ist und auf den anderen Betätigungsvorrichtungabschnitt zu vorsteht, wobei ein Eingriffsabschnitt (32) an dem vorstehenden Ende ausgebildet ist, einen in Eingriff bringbaren Abschnitt (3), der auf dem anderen Betätigungsvorrichtungsabschnitt vorgesehen und lösbar in Eingriff bringbar ist mit dem Eingriffsabschnitt (32), wenn die oberen und unteren Betätigungsvorrichtungsabschnitte (4a), (4b) eng zusammengefügt sind, Mittel (36) zum Vorspannen des Hängebauteils (30a) in eine Richtung, in der sich der Eingriffsabschnitt (32) mit dem in Eingriff bringbaren Abschnitt (33) in Eingriff befindet, und ein Lösebauteil (38), das an dem unteren Formbauteil (2) befestigt ist, um schwenkbar das Hängebauteil (30a) gegen die Vorspannmittel (36) zu bewegen und somit den Eingriffsabschnitt (32) von dem in Eingriff bringbaren Abschnitt (33) zu lösen, wenn das Lösebauteil vertikal relativ zu dem Hängebauteil (30a) bewegt wird.

11. Eine Vulkanisierungsform nach Anspruch 9,
dadurch gekennzeichnet,
daß das Verbindungsmittel (30) umfaßt ein Hakenbauteil (74), das bewegbar von einem horizontalen Zapfen (81) gehalten ist, der im Inneren des oberen Betätigungsvorrichtungsabschnitts (4a) vorgesehen ist und ein unteres Ende aufweist, das über die untere Fläche (82) des oberen Betätigungsvorrichtungsabschnitt (4a) hinaus vorsteht, einen Eingriffsabschnitt (78), der an dem oberen Ende (77) des unteren 5 Betätigungsvorrichtungsabschnitts (4b) vorgesehen und lösbar mit einem Hakenabschnitt (79) an dem vorderen Ende des Hakenbauteils (74) in Eingriff bringbar ist, wenn sich der obere Betätigungsvorrichtungsabschnitt (4a) in engem Kontakt mit dem unteren Betätigungsvorrichtungsabschnitt (4b) befindet, ein elastisches Bauteil (36), um den Hakenabschnitt (79) des Hakenbauteils (74) radial nach innen vorzuspannen und somit den Hakenabschnitt (79) mit dem Eingriffsabschnitt (78) in Eingriff zu bringen, wenn sich der obere Betätigungsvorrichtungsabschnitt (4a) in engem Kontakt mit dem unteren Betätigungsvorrichtungsabschnitt (4b) befindet, und einen Schiebeabschnitt (80), der auf dem oberen Sektorabschnitt (3a) vorgesehen und in Kontakt mit einem Abschnitt des Hakenbauteils (74) bewegbar ist, um den Hakenabschnitt (79) davon radial nach außen gegen die Kraft des elastischen Bauteils (36) zu schieben und das Hakenbauteil (74) von dem Eingriffsabschnitt (78) zu lösen, wenn sich die Form in ihrem geöffneten Zustand befindet, wobei der obere Betätigungsvorrichtungsabschnitt (4a) angehoben ist, um den oberen Sektorabschnitt (3a) relativ dazu geringfügig abzusenken.

## Revendications

1. Moule de vulcanisation destiné à un pneumatique, comprenant des organes supérieur et inférieur (1, 2) de moule de flanc en forme de disque, destinés à former les flancs supérieur et inférieur d'un pneumatique respectivement, des secteurs (3) de formation de bande de roulement comprenant des ensembles de parties supérieure et inférieure de secteur (3a, 3b) disposées en deux anneaux coaxiaux pour assurer le moulage de la région de la bande de roulement du pneumatique, un organe de manoeuvre (4) disposé radialement à l'extérieur des secteurs (3) et comprenant des parties supérieurs et inférieure (4a, 4b) d'organe de manoeuvre destinées à déplacer horizontalement et radialement les ensembles supérieur et inférieur de parties de secteur (3a, 3b) entre des états fermé et ouvert du moule à l'aide de surfaces internes inclinées de coulissement par coopération entre les parties coopérantes (4a ou 4b) d'organe de manoeuvre et (3a ou 3b) de secteur afin que le déplacement vertical de la partie d'organe de manoeuvre (4a, 4b) provoque un déplacement radial des parties (3a, 3b) de secteur, caractérisé par un premier dispositif (29) placé entre la partie inférieure (4b) d'organe de manoeuvre et l'organe inférieur (2) de moule de manière que la partie inférieure (4b) d'organe de manoeuvre soit rappelée vers le haut, et par un second dispositif (13) placé entre la partie supérieure (4a) d'organe de manoeuvre et chaque partie supérieure (3a) de secteur et destiné à rappeler la partie supérieurs (3a) de secteur vers le bas.

2. Moule de vulcanisation destiné à un pneumatique, comprenant des organes supérieur et inférieur (1, 2) de moule de flanc, en forme de disque, destinés à former les flancs supérieur et inférieur respectivement d'un pneumatique, des secteurs (3) de formation de bande de roulement comprenant des ensembles de parties supérieure et inférieure (3a, 3b) de secteur disposées en deux anneaux coaxiaux pour assurer le moulage de la région de la bande de roulement du pneumatique, un organe de manoeuvre (4) disposé radialement à l'extérieur des secteurs (3) et comprenant des parties supérieure et inférieure (4a, 4b) d'organe de manoeuvre afin qu'il déplace horizontalement et radialement les ensembles supérieur et inférieure de parties de secteur (3a, 3b) entre des états de fermeture et d'ouverture du moule à l'aide de surfaces internes inclinées de coulissement par coopération entre des parties coopérantes d'organe de manoeuvre (4a ou 4b) et de secteur (3a ou 3b) afin que le déplacement vertical de la partie d'organe de manoeuvre (4a, 4b) provoque un déplacement radial des parties (3a, 3b) de secteur, caractérisé par un premier dispositif placé entre l'organe supérieur de moule (1) et la partie supérieurs (4a) d'organe de manoeuvre et destiné à rappeler la partie supérieure (4a) d'organe de manoeuvre vers le bas, et par un second dispositif (49) placé entre chaque partie inférieure (3b) de secteur et la partie inférieurs (4b) d'organe de manoeuvre afin que la partie inférieure (3b) de secteur soit rappelée vers le haut.

3. Moule de vulcanisation selon la revendication 1, caractérisé en ce que le dispositif destiné à rappeler la partie inférieurs d'organe de manoeuvre comporte des organes élastiques (2), et le dispositif de rappel de la partie supérieure de secteur comporte des organes élastiques (13).

4. Moule de vulcanisation selon la revendication 2, caractérisé en ce que le dispositif de rappel de la partie supérieure d'organe de manoeuvre comporte des organes élastiques (50), et le dispositif de rappel de la partie inférieure de secteur comprend des organes élastiques (49).

5. Moule de vulcanisation selon la revendication 1, caractérisé par un organe d'arrêt (17, 100) destiné à retenir la partie supérieure de secteur (3a) afin que celle-ci ne puisse pas descendre de plus d'une amplitude prédéterminée par rapport à la partie supérieure d'organe de manoeuvre (4a).

6. Moule de vulcanisation selon la revendication 5, caractérisé en ce que la partie supérieure d'organe de manoeuvre (4a) a une surface périphérique interne inclinée (7a) ayant des arêtes (12) ou des gorges disposées vers le haut ou vers le bas et présentant un espacement circonférentiel prédéterminé, et la partie supérieure de secteur (3a) a une surface externe (9) inclinée avec la même inclinaison que la surface périphérique interne (7a) de la partie supérieure d'organe de manoeuvre (4a) et ayant des gorges (11) ou arêtes coopérant par coulissement avec les arêtes (12) ou gorges à la manière d'un joint en queue d'aronde.

7. Moule de vulcanisation selon la revendication 6, caractérisé en ce que la partie inférieure d'organe de manoeuvre (4b) possède uns surface périphérique interne (23) ayant la même inclinaison que la surface périphérique interne (7a) de la partie supérieure d'organe de manoeuvre (4a) et formée avec des gorges (25) ou arêtes dirigées vers le haut ou vers le bas et ayant un espacsmsnt circonférentiel prédéterminé, et la partie inférieure de secteur (3b) a une surface externe (18) de même inclinaison que la surface périphérique interne (23) de la partie inférieure d'organe de manoeuvre (4b) et ayant des arêtes (26) ou des gorges coopérant avec les gorges (25) ou arêtes à la manière d'un joint en queue d'aronde.

8. Moule de vulcanisation selon l'une des revendications 1 et 2, caractérisé en ce que les faces divisées de raccordement (41) des parties supérieure et inférieure (3a, 3b) de secteur sont formées chacune avec une saillie (47) ou une cavité (48) de positionnement.

9. Moule de vulcanisation selon l'une des revendications 1 et 2, caractérisé en ce que le dispositif de raccordsment (30) est destiné à raccorder temporairement la partie supérieure d'organe de manoeuvre (4a) et la partis inférieurs d'organe de manoeuvre (4b) l'une à l'autre et à libérer les parties d'organe de manoeuvre l'une de l'autre afin qu'elles se séparent lorsque les parties supérieure et inférieure d'organe de manoeuvre (4a, 4b) sont soulevées d'uns amplitude prédéterminés depuis la position de serrage du moule à un niveau inférieur.

10. Moule de vulcanisation selon la revendication 9, caractérisé en ce que le dispositif de raccordement (30) comporte un organe de suspension (30a) qui peut pivoter sur l'une des parties supérieure et inférieure d'organe de manoeuvre (4a et 4b) et dépassant vers l'autre partie d'organe de manoeuvre avec une partis de coopération (32) formés à l'extrémité en saillie, une partie complémentaire (3) étant placée sur l'autre partie d'organe de manoeuvre et pouvant être en prise avec la partie de coopération (32) lorsque les parties supérieure et inférieure d'organe de manoeuvre (4a, 4b) sont montées en coopération intime, un dispositif (36) de rappel de l'organe de suspension (30a) dans un sens dans lequel la partie de coopération (32) est en prise avec la partie complémentaire (33), et un organe de séparation (38) fixé à l'organe inférieur de moule (2) et destiné à faire pivoter l'organe de suspension (30a) malgré la force du dispositif de rappel (36) afin que la partie de coopération (32) soit séparés de la partie complémentaire (33) lorsque l'organe de libération est déplacé verticalement par rapport à l'organe de suspension (30a).

11. Moule de vulcanisation selon la revendication 9, caractérisé en ce que le dispositif de raccordement (30) comporte un organe à crochet (74) supporté par un pivot horizontal (81) placé à l'intérieur de la partie supérieure d'organe de manoeuvre (4a) et ayant une extrémité inférieure qui dépasse au-delà de la surface inférieure (82) de la partie supérieure (4a) d'organe de manoeuvre, une partie de coopération (78) placée à l'extrémité supérieure (77) de la partie inférieure d'organe de manoeuvre (4b) et pouvant coopérer temporairement avec une partis de crochet (79) placée à l'extrémité avant de l'organe à crochet (74) lorsque la partie supérieurs d'organe de manoeuvre (4a) est en contact intime avec la partie inférieure d'organe de manoeuvre (4b), un organe élastique (36) de rappel de la partis de crochet (79) de l'organe à crochet (74) radialement vers l'intérieur afin que la partie de crochet (79) soit en prise avec la partie de coopération (78) lorsque la partie supérieure d'organe de manoeuvre (4a) est en contact intime avec la partie inférieure (4b) d'organe de manoeuvre, et une partie de poussée (80) placés sur la partie supérieurs de secteur (3a) et mobile au contact d'une partie de l'organe à crochet (74) afin que sa partie de crochet (79) soit repoussée radialement vers l'extérieur malgré la force de l'organe élastique (36) et libère l'organe à crochet (74) de la partie de coopération (78) lorsque le moule est à l'état ouvert, la partie supérieure d'organe de manoeuvre (4a) étant soulevée afin que la partie supérieure de secteur (3a) soit légèrement abaissée par rapport à elle.
